# EUROPEAN PATENT APPLICATION

(11) **EP 4 520 797 A1**
(43) Date of publication of application: **12.03.2025**
(21) Application number: 23935628.0
(22) Date of filing: 07.07.2023
(51) Int. Cl.: C09D 201/00, B41M 5/28, C09D 5/00

(54) **DISPERSION**

(71) Applicant: Chukyo Yushi Co., Ltd., Ama-shi, Aichi 490-1212 (JP)
(72) Inventor: HIRAMATSU, Hiroshi, Ama-shi, Aichi 4901212 (JP); OHASHI, Naotaka, Ama-shi, Aichi 4901212 (JP); ARATANI, Kenichi, Ama-shi, Aichi 4901212 (JP)
(74) Representative: Winter, Brandl - Partnerschaft mbB
(86) International application number: PCT/JP2023/025361
(87) International publication number: WO 2025/013146

(57) **Abstract**

A thermosensitive layer for a thermosensitive recording material formed of a dispersion, in which a fatty acid amide is contained as a thermosensitive particle whose property changes from lightproof to light-permeable by heating, has issues regarding abrasion resistance and calender roll smudge etc.

A dispersion of the present invention is a dispersion for forming a thermosensitive layer, wherein the property of the thermosensitive layer changes from lightproof to light-permeable by intentional heating,
a thermosensitive particle whose property is changed by intentional heating, an inorganic particle, and a binder are contained, and
at least one wax particle selected from the group of behenic acid, carnauba wax, and rice bran wax is contained as the thermosensitive particle.

## Description

### TECHNICAL FIELD

The present invention relates to a dispersion for forming a thermosensitive layer of a thermosensitive recording material.

### BACKGROUND ART

In a thermosensitive layer in a general-purpose thermosensitive recording material, a thermo-chromogenic reaction between a colorless or light-colored leuco dye and a color developer that includes a phenol or an organic acid is utilized to develop a color. A colored image is created when intentional heat is applied to a specific region of the thermosensitive layer of such a thermosensitive recording material. This makes it possible for a thermosensitive recording material to have such advantages as making a recording device more compact, easy maintenance of a recording device and low noise generation and therefore to be widely used as recording paper or the like supplied to an issuing machine such as a label printer, an automatic ticket vending machine, an ATM, an order slip output machine in a restaurant etc., a data output machine of a scientific research device, or the like.

However, there has become keenly aware of the safety of components included in thermosensitive recording materials, for instance, phenolic color developers such as 2,2-bis(4-hydroxyphenyl)propane (bisphenol A) and bis(4-hydroxyphenyl)sulfone (bisphenol S) used in a thermosensitive layer of typical thermosensitive recording materials are excellent in color developing property, but may be classified as endocrine disruptors, and hence the use thereof has been prohibited in Europe since January 2020.

Due to concerns about the safety of phenolic color developers, phenol-skeleton-free (hereinafter referred to as non-phenolic) color developers have been becoming used as a substitute for phenol-based color developers, but the safety of the non-phenolic color developers has not been sufficiently verified, and there are still remaining issues on traditional thermosensitive recording materials, for instance, the non-phenol-based color developers, including leuco dyes, cannot be used for food contact applications.

As a solution to the issues, there has been proposed a thermosensitive recording material in which a thermosensitive layer is laminated on a colored foundation layer (see Patent Document 1). In this thermosensitive recording material, high-quality paper coated with a black paint or a resin film dyed in black, for example, is employed as the colored foundation layer. The property of the thermosensitive layer changes from lightproof to light-permeable by intentional heating. Being in the lightproof state, the thermosensitive layer shields visible light and makes the color of the foundation layer visually unrecognizable. On the other hand, when the thermosensitive layer becomes the light-permeable state, visible light passes through the thermosensitive layer, and the color of the foundation layer can be visually recognized. Such thermosensitive layer contains a hollow polymer particle, an inorganic particle, and a binder. The action by which the property of the thermosensitive layer changes from lightproof to light-permeable is believed to be as follows. In a state before being heated, the light shielding property of the thermosensitive layer is maintained by the light scattering effect of the hollow polymer particle. In contrast, when the hollow polymer particle is deformed by heating, the light scattering effect thereof decreases, and the thermosensitive layer in the heated region has light permeability.

Since microplastics have been discussed as an environmental issue recently, there is also a concern of restrictions on the use of the aforesaid hollow polymer particle for thermosensitive recording materials.

Patent Documents 2, 3, and 4 propose to use a thermosensitive wax in place of the hollow polymer particle. The property of the thermosensitive wax changes from lightproof to light-permeable by intentional heating, and in the aforementioned examples, a fatty acid amide is employed. That is, there has been proposed a thermosensitive recording material of a configuration having a thermosensitive layer, in which a fatty acid amide, an inorganic particle, and a binder are contained, laminated on a colored foundation layer.

### CITATIONS LIST

### PATENT LITERATURE

Patent Literature 1: WO 2010/48394 A
Patent Literature 2: WO 2019/141751 A
Patent Literature 3: EP 2993055 B1
Patent Literature 4: EP 3957489 B1

### SUMMARY OF INVENTION

### TECHNICAL PROBLEMS

The present inventors have studied the performance of a thermosensitive layer that contains a fatty acid amide. When stearamide as a fatty acid amide, silica as an inorganic particle, and polyvinyl alcohol as a binder were employed to prepare a thermosensitive layer that contains these components, and this thermosensitive layer was layered on a black foundation layer, this thermosensitive layer before heating certainly has exhibited high light shielding property and high whiteness (Comparative Examples 2 to 5).

However, such a thermosensitive layer was poor in abrasion resistance. For example, an unheated region of the thermosensitive layer is easily changed only by rubbing with a finger, and the ground color of the foundation layer was enabled to be visually recognized.

In addition, the thermosensitive recording material including the aforesaid thermosensitive layer has a productivity challenge as well. Typically, a smoothing process with a calender roll is required to smoothen the surface of the thermosensitive recording material. However, the thermosensitive layer including a fatty acid amide is vulnerable, and when the calender roll is pressed against the thermosensitive recording material, an adhesion (a transfer) of components in the thermosensitive layer to the calender roll occurred in some cases. When the calender roll is smudged in this manner, the smoothness of the surface of the thermosensitive recording material is deteriorated, and a decrease in print property occurs. There are necessities of cleaning of the calender roll and the like in order to avoid this, and a decrease in productivity also occurs.

### SOLUTIONS TO PROBLEMS

The inventors of the present invention have intensively studied to solve at least one of the aforesaid problems, and have conceived the present invention.

That is, a first aspect of the present invention is defined as follows.

A dispersion for forming a thermosensitive layer, wherein
the property of the thermosensitive layer changes from lightproof to light-permeable by intentional heating,
a thermosensitive particle whose property is changed by the intentional heating, an inorganic particle, and a binder are contained, and
at least one wax particle selected from the group of behenic acid, carnauba wax, and rice bran wax is contained as the thermosensitive particle.

When at least one wax particle selected from the group of behenic acid, carnauba wax, and rice bran wax was employed as the thermosensitive particle, the resultant thermosensitive layer has become to be more excellent in abrasion resistance as compared with a thermosensitive layer of a traditional example in which a fatty acid amide was used.

In addition, no transfer to the calender roll has occurred.

Such an action was maintained as well when a fatty acid amide was concomitantly used as a thermosensitive particle.

A wax-based thermosensitive particle such as a behenic acid and an ester wax (such as carnauba wax and rice bran wax) and a fatty acid amide wax (such as stearamide) is referred to as a type-A thermosensitive particle in this specification.

When such type-A thermosensitive particle is employed, the wax component thereof ensures slipperiness (print property) and releasability for the thermosensitive layer.

Particles of behenic acid, of carnauba wax, and of rice bran wax each have light shielding property in a default state (a state prior to an intended application of heat: hereinafter, abbreviated as "a state before heating" in some cases) and do not allow visible light to pass therethrough. As a result, in a state before heating, these particles work together with an inorganic particle to make the property of the thermosensitive layer lightproof, and thereby making the ground color of the colored foundation layer visually unrecognizable from the outside.

In contrast, when heat of a general-purpose thermal head (intentional heat) is applied, the properties of behenic acid, of carnauba wax, and of rice bran wax change to light-permeable.

The blending amount of at least one selected from the group of behenic acid, carnauba wax, and rice bran wax, in the thermosensitive layer can be appropriately determined in combination with the blending amount of an inorganic particle and another particle, but the blending should be made such that the color of the colored foundation layer is not visually recognizable when the colored foundation layer is coated with the thermosensitive layer.

When the blending amount of the inorganic particle increases, the light shielding property of the thermosensitive layer in a state before heating can be maintained even when the blending amount of the thermosensitive particle is reduced. On the other hand, an excessive blending of the inorganic particle becomes a hindrance for the property of the thermosensitive layer to becoming light-permeable because the property of the inorganic particle does not become light-permeable even with intentional heating.

In other words, the blending amount of the inorganic particle is adjusted so the transparency of the thermosensitive layer after heating as to be ensured. According to the study by the present inventors, the blending amount of the inorganic particle is preferably 30 mass% or less with respect to all the blending components other than the dispersion medium in the dispersion (hereinafter, simply referred to as a "total blending components" in some cases).

The lower limit of the blending amount of the inorganic particle is not particularly limited, but the blending amount of the inorganic particle can be 20 mass% or more with respect to total blending components in order to ensure the thermosensitive layer in a state before heating with sufficient light shielding property.

Such inorganic particle is preferably whitish. As the whitish inorganic particle, a particle having any particle size of titanium oxide, silica, alumina, aluminum hydroxide, calcium carbonate, bentonite, kaolin, and the like can be used.

A colored inorganic particle can be used as the inorganic particle and thereby imparting a color to the thermosensitive layer.

A binder is an agent with which the thermosensitive particle, the inorganic particle, and another containing particle are bound together.

As such a binder resin, there can be employed a water-soluble polymer such as polyvinyl alcohol or a cellulose derivative.

As the thermosensitive particle, a concomitant use of the amide-based wax used in traditional examples is not precluded.

The blending amount of at least one selected from the group of behenic acid, carnauba wax, and rice bran wax can be appropriately selected according to the purpose of the thermosensitive recording material. From a point of view of ensuring the abrasion resistance, the blending amount thereof can be 10 mass% or more in total blending components. The blending amount is more preferably 20 mass%, still more preferably 30 mass% or more.

The upper limit of the blending amount of the wax is not particularly limited, but may be 80 mass% of total blending components.

On the condition that the wax is contained in an amount of 10 mass% or more of total blending components, the upper limit of the blending amount of the type-A wax-based thermosensitive particle is not particularly limited, but can be 80 mass% of total blending components. More preferably, the upper limit thereof can be 70 wt.% of total blending components.

Another thermosensitive particle (type-B) can be blended in the dispersion.

Examples of the type-B thermosensitive particle include a 1,2-diphenoxyethane particle and/or a polylactic acid particle. By blending these particles, the whiteness of the thermosensitive layer in a state before heating is improved.

The properties of 1,2-diphenoxyethane particle and of the polylactic acid particle also change from lightproof to light-permeable by intentional heating with a thermal head.

The blending amounts of the 1,2-diphenoxyethane particle and of the polylactic acid particle can be in a range from 20 mass% to 60 mass% with respect to total blending components.

When these particles are blended in an amount of 20 mass% or more, the whiteness of the thermosensitive layer can be improved. On the other hand, even when these particles are blended in an amount of more than 50 mass%, almost no improvement in whiteness was noticed.

The type-B thermosensitive particle in a state before heating has a higher light shielding property than that of the type-A thermosensitive particle, and hence an increased blending amount of the type-B thermosensitive particle can enhance the whiteness of the thermosensitive layer. Along with that, the type-B thermosensitive particle is harder than the type-A thermosensitive particle and thus can impart good abrasion resistance to the thermosensitive layer.

Examples of such type-B thermosensitive particle include a hollow polymer particle as well.

In the dispersion, zinc stearate and another auxiliary agent can be blended in order to ensure printing suitability (slipperiness, prevention of smudge on thermal head, etc.) depending on the purpose of the thermosensitive layer.

As a dispersion medium for such dispersion, water can be employed. As a matter of course, alcohol or another organic material can be concomitantly used as the dispersion medium.

As a dispersion aid of the dispersion, there can be used one or a mixture of two or more selected from the group of an anionic surfactant, a cationic surfactant, an amphoteric surfactant, a nonionic surfactant, a polymer surfactant, a cationic polymer compound, and an anionic polymer compound. An adjustment of the surface tension can improve the uniformity of a coating film surface and thereby an improvement in whiteness can also be expected.

As an aid for such a dispersion, a thickener set forth below can be blended. An adjustment of the viscosity enables to improve the storage stability of the dispersion and to improve coating suitability during applying the dispersion.

Examples of the thickener include: cellulose derivatives such as methyl cellulose, carboxymethyl cellulose, hydroxyethyl cellulose, hydroxyethyl methyl cellulose, hydroxypropyl methyl cellulose and hydroxypropyl cellulose; starch derivatives such as cationized starch and etherified starch; plant gums such as gum arabic, guar gum and xanthan gum; animal polymers such as casein, chitosan and chitin; and polyalkoxide-based polymers such as polyethylene glycol.

The blending amount of the thickener is appropriately selected according to the purpose or the like of the dispersion, and can be, for example, from 0.01 to 2.0 mass% with respect to the total mass of the coating material (the dispersion) for the thermosensitive layer.

The color of the surface (on which the thermosensitive layer is to be laminated) of the colored foundation layer on which the thermosensitive layer is to be laminated need to be different from the color of the thermosensitive layer in a state before heating.

In a general-purpose thermosensitive recording material, the surface color in a state before heating is white, and thus the color of the surface of the colored foundation layer is preferably black. This is because a strong contrast is created between the white color of the thermosensitive layer in a state before heating and the black color of the foundation layer.

The material of the colored foundation layer is not particularly limited, but the colored foundation layer can be made of paper in order to serve the same purpose as that of general thermosensitive paper. When the thermosensitive layer is used for another purpose, the material of the colored foundation layer can be freely chosen according to this purpose.

The thickness of the thermosensitive layer can be freely chosen under the following conditions. Namely, the color of the colored foundation layer should not be visually recognized in a state before heating, and the property of a heated region should change to light-permeable under the condition of intentional heating to be applied to the thermosensitive layer.

Specifically, the thickness of the thermosensitive layer can be in a range from 2 µm to 12 µm, preferably from 3 µm to 10 µm, and more preferably from 3 µm to 7 µm.

The thermosensitive layer may have a multilayer structure.

For example, a first layer that is in contact with the colored foundation layer is configured to be blended with the A-type thermosensitive particle (e.g., a fatty acid amide) other than at least one wax particle selected from behenic acid, carnauba wax, and rice bran wax, and a second layer that is to be laminated on the first layer is configured to contain at least one wax particle selected from behenic acid, carnauba wax, and rice bran wax.

### BRIEF DESCRIPTION OF DRAWINGS

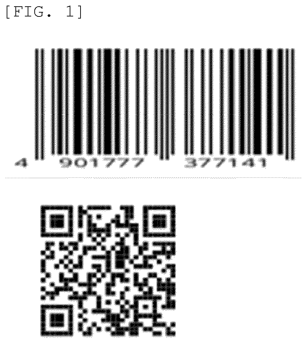

FIG. 1 illustrates a barcode used for print performance evaluation.

### DESCRIPTION OF EMBODIMENTS

There is no particular limitation on the behenic acid (Cas Number: 112-85-6, also referred to as behenic acid) to be used in the dispersion of the present invention, and examples thereof include NAA-222S (behenic acid: 85 wt.%, melting point: 78-82°C) available from NOF CORPORATION, LUNAC BA (behenic acid: 85 wt.%, arachidic acid: 10 wt.%, melting point: 78-82°C) available from Kao Corporation, and Behenic acid 90% (behenic acid: 90 wt.%, melting point: 78-82°C) available from VVF (India) Limited.

The carnauba wax (Cas Number: 8015-86-9) to be used in the dispersion of the present invention is a material derived from a natural product obtained by purifying carnauba wax collected from a species of palm tree of Arecaceae family, and is composed of 80 to 85 mass% wax esters, 3 to 4 mass% free fatty acids, 10 to 12 mass% free alcohols, and 1 to 3 mass% hydrocarbons. Carnauba wax is also suitable in terms of its well known food safety as being used as a food additive, for example. As the carnauba wax, a commercially available product can be used, and examples thereof include carnauba waxes No. 1, No. 2, and No. 3 (melting point: 82-88°C) available from Toyochem Co., Ltd., and carnauba waxes No. 1, No. 2, and No. 3 (melting point: 82-88°C) available from S. KATO & CO.

Rice bran wax (Cas Number: 8016-60-2) to be used in the present invention is a vegetable wax extracted from rice bran oil. Rice bran wax contains fatty acids and higher alcohols as main components, and palmitic acid, behenic acid, and lignoceric acid are mainly contained as the fatty acids, and 1-hexacosanol and 1-tricontanol are mainly contained as the higher alcohols.

As the rice bran wax, a commercially available product can be used, and examples thereof include TOWAX-3 (melting point: 76-86°C) series available from TOA KASEI CO., LTD. and XECO-0002B (melting point: 82-88°C) available from NIPPON SEIRO CO., LTD.

The aforesaid behenic acid, carnauba wax, and rice bran wax may be used singly, or may be concomitantly used.

The blending amount of these waxes is preferably in a range from 10 mass% to 80 mass% with respect to the total mass of the dispersoid in the dispersion, that is, the thermosensitive particle, the inorganic particle, the binder, and another auxiliary agent (hereinafter, referred to as blending components of the dispersion). When the blending amount of these waxes is less than 10 mass%, the slipperiness is insufficient and abnormal noise and printing failure may occur when a receipt printer is used to print, and furthermore, there is a concern that transfer to a calender roll may occur because releasability becomes insufficient. Even when the blending amount of these waxes is more than 80 mass%, abrasion resistance and prevention of transfer to a calender roll can be achieved. However, in view of the fact that the binder as an essential component needs to account for 10 mass%, there is a concern that the light shielding property of the thermosensitive layer in a state before heating becomes inadequate as a result of the blending amount of particles effective for the light shielding property, such as the inorganic particle, being restricted.

An ester-based wax having a melting point of 70 to 90°C, other than behenic acid, carnauba wax, and rice bran wax, is believed to have a function similar to that of behenic acid, carnauba wax, and rice bran wax. In particular, behenyl behenate (Cas Number: 17671-27-1, melting point: ca. 75°C) can provide the same light shielding property, slipperiness and releasability as those of carnauba wax and rice bran wax, and thus behenyl behenate may be used singly, or may be concomitantly used.

The particle size of the thermosensitive particle (type-A) is not particularly limited, but from a point of view of ensuring dispersibility in the dispersion and smoothness of the surface of the thermosensitive layer, the average particle size thereof is preferably in a range from 0.5 to 10 µm. The method for measuring the average particle size is according to the description in Examples.

As the inorganic particle, a large number of pigments traditionally used in thermosensitive recording material can be employed. For example, the pigment is selected from the group consisting of calcined kaolin, natural kaolin, kaolinite, magnesium silicate hydrate, silicon dioxide, bentonite, calcium carbonate, calcium silicate hydrate, calcium aluminate sulfate, aluminum hydroxide, aluminum oxide, and boehmite.

The blending amount of these inorganic particles is preferably 30 mass% or less in total blending components of the dispersion. The lower limit of the blending amount of the inorganic particle is not particularly limited, but the blending amount of the inorganic particle can be 20 mass% or more with respect to total blending components of the dispersion in order to ensure sufficient light shielding property of the thermosensitive layer in a state before heating.

The particle size of the inorganic particle is not particularly limited, but the average particle size thereof is preferably in a range from 0.5 to 10 µm from a point of view of ensuring dispersibility in the dispersion and smoothness of the surface of the thermosensitive layer. The method for measuring the average particle size is according to the description in Examples.

A binder is an agent with which the thermosensitive particle, the inorganic particle, and another containing particle are bound together.

As such a binder resin, there can be employed a water-soluble polymer such as polyvinyl alcohol or a cellulose derivative.

As the polyvinyl alcohol, polyvinyl alcohols such as completely (partially) saponified polyvinyl alcohol, carboxy-modified polyvinyl alcohol, acetoacetyl-modified polyvinyl alcohol, and silicon-modified polyvinyl alcohol can be used.

Examples of the cellulose derivatives include hydroxyethyl cellulose, methyl cellulose, and carboxymethyl cellulose.

The amount of the binder used can be appropriately selected according to the purpose of the thermosensitive recording material, and can be in a range from 5 to 25 mass% with respect to the entire dispersoids of the dispersion.

As the type-B thermosensitive particle contained in the dispersion of the present invention, examples thereof that may be mentioned include 1,2-diphenoxyethane particle and/or polylactic acid particle. These particles can improve the light shielding property (whiteness) of the thermosensitive layer in a state before heating because the whiteness of these particles in a state before heating is higher than that of the type-A thermosensitive particle.

There is no particular restriction on the purity or the like of the 1,2-diphenoxyethane (Cas Number: 104-66-5) used in the present invention, and examples thereof include KS-235 (melting point: 97°C) available from SANKO Co., Ltd.

As the polylactic acid used in the present invention, there can be used polylactic acid prepared by polymerization with use of lactic acid or lactide obtained by thermal decomposition of lactic acid, and a copolymer of lactic acid and another hydroxycarboxylic acid.

In the copolymer of lactic acid and another hydroxycarboxylic acid, the other hydroxycarboxylic acid is not particularly limited, and examples thereof include glycolic acid, 2-hydroxybutyric acid, 2-hydroxyvaleric acid, 2-hydroxycaproic acid, 2-hydroxyheptanoic acid, 2-hydroxyoctanoic acid, 2-hydroxy-2-methylpropionic acid, 2-hydroxy-2-methylbutyric acid, 2-hydroxy-2-ethylbutyric acid, 2-hydroxy-2-methylvaleric acid, 2-hydroxy-2-ethylvaleric acid, 2-hydroxy-2-propylvaleric acid, 2-hydroxy-2-butylvaleric acid, 2-hydroxy-2-methylcaproic acid, 2-hydroxy-2-ethylcaproic acid, 2-hydroxy-2-propylcaproic acid, 2-hydroxy-2-butylcaproic acid, 2-hydroxy-2-pentylcaproic acid, 2-hydroxy-2-methylheptanoic acid, 2-hydroxy-2-ethyl heptanoic acid, 2-hydroxy-2-propyl heptanoic acid, 2-hydroxy-2-butyl heptanoic acid, 2-hydroxy-2-methyloctanoic acid, 3-hydroxypropionic acid, 4-hydroxybutyric acid, 5-hydroxyvaleric acid, 6-hydroxycaproic acid, and 7-hydroxyheptanoic acid. These may be used singly, or two or more types thereof may be used in combination.

In the copolymer of lactic acid and another hydroxycarboxylic acid, the mole ratio of the hydroxycarboxylic acid monomer to the lactic acid monomer is not particularly limited, and is, for example, 0.2 or less, or 0.1 or less, or 0.05 or less.

When polylactic acid is used as the polylactic acid resin, the content of D-lactic acid is preferably in a range from 1 to 30 mol%, and more preferably from 5 to 20 mol%.

Lactic acid and hydroxycarboxylic acid may take the form of D-form, L-form, D/L-form, or the like, but there is no limitation on their form, and any form can be used.

The weight average molecular weight of the polylactic acid resin is preferably in a range from 5000 to 1 million and more preferably from 10,000 to 300,000.

The weight average molecular weight (Mw) of the polylactic acid resin can be determined by the method described in the section of Examples described later, for example, by comparison with a standard substance of known molecular weight by gel permeation chromatography (GPC).

The blending amount of the type-B thermosensitive particle can be freely chosen depending on the purpose of the thermosensitive recording material, but can be 60 mass% or less with respect to total blending components of the dispersion.

When the blending amount of the type-B thermosensitive particle is more than 60 mass%, the blending amount of the type-A thermosensitive particle is restricted, and the slipperiness (print property) and releasability of the thermosensitive layer are difficult to be ensured.

The lower limit of the blending amount of the type-B thermosensitive particle is not particularly limited. The blending amount of the type-B thermosensitive particle can be zero by blending the inorganic particle.

The particle size of the thermosensitive particle (type-B) is not particularly limited, but from a point of view of ensuring dispersibility in the dispersion and smoothness of the surface of the thermosensitive layer, the average particle size is preferably in a range from 0.5 to 10 µm. The method for measuring the average particle size is according to the description in Examples.

### EXAMPLES

Hereinafter, examples of the present invention will be described.

The examples relate to a dispersion for obtaining a thermosensitive layer of a thermosensitive recording material.

The thermosensitive recording material has a structure in which a thermosensitive layer is laminated on the surface of a colored foundation layer, and is obtained by applying each dispersion of Examples to the surface of the colored foundation layer followed by drying.

Single color origami (surface color: black), available from Toyo Corporation, having a grammage of 55 g/m² was employed as a colored foundation layer on which each dispersion of Examples and of Comparative Examples described below to be laminated.

Note that, unless otherwise specified, "part(s)" and "%" respectively indicate "part(s) by mass" and "mass%" in the following description. As the average particle diameter, there was indicated a value corresponding to a cumulative value of 50% in a particle size distribution obtained by measurement with a laser diffraction particle size analyzer (Microtrac MT3300II available from MicrotracBEL Corp.). Details are explained in Journal of the Japan Society of Colour Material "Shikizai" 67 [7], 463-473 (1994).

Preparation of the dispersion for the thermosensitive layer will be described below.

### (1) Preparation of Type-A Thermosensitive Particle

### (1-1) Preparation of Behenic Acid Dispersion (A-1 Liquid)

Twenty parts of a fine powder of behenic acid (trade name: NAA-222S, available from NOF CORPORATION, behenic acid content: 85 wt.%, melting point: 74-78°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 4.4 µm to give a behenic acid dispersion (A-1 liquid).

### (1-2) Preparation of Behenic Acid Dispersion (A-2 Liquid)

Twenty parts of a fine powder of behenic acid (trade name: NAA-222S, available from NOF CORPORATION, behenic acid content: 85 wt.%, melting point: 74-78°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 2.2 µm to give a behenic acid dispersion (A-2 liquid).

### (1-3) Preparation of Carnauba Wax Dispersion (A-3 Liquid)

Twenty parts of a fine powder of carnauba wax (trade name: Carnauba wax No. 2, available from Toyochem Co., Ltd., melting point: 80-86°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 2.5 µm to give a carnauba wax dispersion (A-3 liquid).

### (1-4) Preparation of Rice Bran Wax Dispersion (A-4 Liquid)

Twenty parts of a fine powder of rice bran wax (trade name: XECO-0002B, available from NIPPON SEIRO CO., LTD., melting point: 77-86°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 2.5 µm to give a rice bran wax dispersion (A-4 liquid).

Thermosensitive particles and binders used in Examples and Comparative Examples are below.

### (1-5) Preparation of stearamide Dispersion (A-5 Liquid)

Used was Hidorin U-425CE (solid content concentration: 35%, average particle size: 3.5 µ, melting point of stearamide: 100°C) available from CHUKYO YUSHI CO., LTD.

### (2) Preparation of Type-B Thermosensitive Particle

### (2-1) Preparation of 1,2-Diphenoxyethane Dispersion (B-1 Liquid)

Twenty parts of 1,2-diphenoxyethane (trade name: KS-235, available from SANKO Co., Ltd., melting point: 97°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 0.8 µm to give a 1,2-diphenoxyethane dispersion (B-1 liquid).

### (2-2) Preparation of Polylactic Acid Dispersion (B-2 Liquid)

Twenty parts of a fine powder of polylactic acid (trade name: LX930, D-lactic acid : L-lactic acid = 8 : 92, available from Total Corbion PLA, Tg: 60°C, melting point: 130°C), 20 parts of a 10% aqueous solution of polyvinyl alcohol (degree of saponification: 88%, degree of polymerization: 500), and 60 parts of water were mixed, and this mixture was grinded with a sand mill until the average particle diameter became 1.8 µm to give a polylactic acid dispersion (B-2 liquid).

### (3) Preparation of Inorganic Particle Dispersion

### (3-1) Preparation of Silica Dispersion (C)

Twenty parts of silica (trade name: MIZUKASIL P-527, available from Mizusawa Industrial Chemicals, Ltd.), 20 parts of a 10% aqueous solution of polyvinyl alcohol (degree of saponification: 98%, degree of polymerization: 500), and 60 parts of water were mixed and dispersed with a sand mill until the average particle diameter became 5.0 µm to give a silica dispersion (C liquid).

### (4) Preparation of Binder

### (4-1) Polyvinyl Alcohol A (D-1 Liquid)

GOHSENOL NL-05 (degree of saponification: 98-99.0 mol%, degree of polymerization: 500) available from Mitsubishi Chemical Corporation was dissolved in water and used (solid content concentration: 7%).

### (4-2) Polyvinyl Alcohol B (D-2 Liquid)

GOHSENOL N-300 (degree of saponification: 98-99.0mol%, degree of polymerization: 30,000) available from Mitsubishi Chemical Corporation was dissolved in water and used (solid content concentration: 7%).

### (4-3) Hydroxymethylpropyl Cellulose (D-3 Liquid)

METOLOSE 60SH-05 available from Shin-Etsu Chemical **Co.,** Ltd. was dissolved in water and used (solid content concentration: 7%).

### (4-4) Methyl Cellulose (D-4 Liquid)

Benecel A15 available from Ashland Japan **K.K.** was dissolved in water and used (solid content concentration: 7%).

### (Example 1)

### (4) Preparation of Coating Material for Thermosensitive Layer

A composition including 318.2 parts of the A-1 liquid, 90.9 parts of the C liquid, and 142.9 parts of the D-1 liquid was mixed and stirred to afford a coating material for a thermosensitive recording layer.

### (5-2) Production of Thermosensitive Recording Material

The dispersion was applied onto one surface of the aforesaid single color origami (black) having a grammage of 55 g/m² as the colored foundation layer so the application amount after drying as to be 5.0 g/m², and dried at 60°C for 3 minutes to form a thermosensitive recording layer, and then the surface was smoothed with a calender roll. The dry film thickness (g/m²) of the thermosensitive layer was determined from the difference between the mass of the foundation layer before application of the dispersion and the mass of the thermosensitive recording material having the thermosensitive layer laminated by drying.

### (Example 2)

A thermosensitive recording material was obtained in a similar manner to Example 1 except that the D-3 liquid was used in place of the D-1 liquid in the preparation of the dispersion of Example 1.

### (Example 3)

A thermosensitive recording material was obtained in a similar manner to Example 1 except that the A-2 liquid was used in place of the A-1 liquid in the preparation of the dispersion of Example 1.

### (Example 4)

A thermosensitive recording material was obtained in a similar manner to Example 1 except that 272.7 parts of the A-1 liquid, 136.4 parts of the C liquid, and 142.9 parts of the D-1 liquid were used in the preparation of the dispersion of Example 1.

### (Example 5)

A thermosensitive recording material was obtained in a similar manner to Example 1 except that 227.3 parts of the A-1 liquid, 113.6 parts of the C liquid, 357.1 parts of the D-1 liquid, and 40.0 parts of water were used in the preparation of the dispersion of Example 1.

### (Example 6)

A thermosensitive recording material was obtained in a similar manner to Example 5 except that the A-2 liquid was used in place of the A-1 liquid in the preparation of the dispersion of Example 5.

### (Example 7)

A thermosensitive recording material was obtained in a similar manner to Example 1 except that 181.8 parts of the A-1 liquid, 28.6 parts of the A-5 liquid, 113.6 parts of the C liquid, 357.1 parts of the D-1 liquid, and 80.0 parts of water were used in the preparation of the dispersion of Example 1.

### (Example 8)

A thermosensitive recording material was obtained in a similar manner to Example 1 except that the A-3 liquid was used in place of the A-1 liquid in the preparation of the dispersion of Example 1.

### (Example 9)

A thermosensitive recording material was obtained in a similar manner to Example 1 except that the A-4 liquid was used in place of the A-1 liquid in the preparation of the dispersion of Example 1.

### (Example 10)

A thermosensitive recording material was obtained in a similar manner to Example 1 except that 181.8 parts of the A-1 liquid, 85.7 parts of the A-5 liquid, 90.9 parts of the C liquid, 142.9 parts of the D-1 liquid, and 130.0 parts of water were used in the preparation of the dispersion of Example 1.

### (Example 11)

A thermosensitive recording material was obtained in a similar manner to Example 1 except that 181.8 parts of the A-1 liquid, 90.9 parts of the B-1 liquid, 136.4 parts of the C liquid, and 142.9 parts of the D-1 liquid were used in the preparation of the dispersion of Example 1.

### (Example 12)

A thermosensitive recording material was obtained in a similar manner to Example 1 except that 181.8 parts of the A-1 liquid, 136.4 parts of the B-1 liquid, 90.9 parts of the C liquid, and 142.9 parts of the D-1 liquid were used in the preparation of the dispersion of Example 1.

### (Example 13)

A thermosensitive recording material was obtained in a similar manner to Example 12 except that the A-2 liquid was used in place of the A-1 liquid in the preparation of the dispersion of Example 12.

### (Example 14)

A thermosensitive recording material was obtained in a similar manner to Example 12 except that the D-2 liquid was used in place of the D-1 liquid in the preparation of the dispersion of Example 12.

### (Example 15)

A thermosensitive recording material was obtained in a similar manner to Example 12 except that the D-3 liquid was used in place of the D-1 liquid in the preparation of the dispersion of Example 12.

### (Example 16)

A thermosensitive recording material was obtained in a similar manner to Example 12 except that the D-4 liquid was used in place of the D-1 liquid in the preparation of the dispersion of Example 12.

### (Example 17)

A thermosensitive recording material was obtained in a similar manner to Example 1 except that 136.4 parts of the A-1 liquid, 181.8 parts of the B-1 liquid, 90.9 parts of the C liquid, and 142.9 parts of the D-1 liquid were used in the preparation of the dispersion of Example 1.

### (Example 18)

A thermosensitive recording material was obtained in a similar manner to Example 1 except that 90.9 parts of the A-1 liquid, 227.3 parts of the B-1 liquid, 90.9 parts of the C liquid, and 142.9 parts of the D-1 liquid were used in the preparation of the dispersion of Example 1.

### (Example 19)

A thermosensitive recording material was obtained in a similar manner to Example 1 except that 45.5 parts of the A-1 liquid, 272.7 parts of the B-1 liquid, 90.9 parts of the C liquid, and 142.9 parts of the D-1 liquid were used in the preparation of the dispersion of Example 1.

### (Example 20)

A thermosensitive recording material was obtained in a similar manner to Example 12 except that the A-3 liquid was used in place of the A-1 liquid in the preparation of the dispersion of Example 12.

### (Example 21)

A thermosensitive recording material was obtained in a similar manner to Example 12 except that the A-4 liquid was used in place of the A-1 liquid in the preparation of the dispersion of Example 12.

### (Example 22)

A thermosensitive recording material was obtained in a similar manner to Example 12 except that the B-2 liquid was used in place of the B-1 liquid in the preparation of the dispersion of Example 12.

### (Example 23)

A thermosensitive recording material was obtained in a similar manner to Example 22 except that the A-2 liquid was used in place of the A-1 liquid in the preparation of the dispersion of Example 22.

### (Example 24)

A thermosensitive recording material was obtained in a similar manner to Example 1 except that 181.8 parts of the A-1 liquid, 90.9 parts of the B-1 liquid, 136.4 parts of the C liquid, and 142.9 parts of the D-1 liquid were used in the preparation of the dispersion of Example 1.

### (Example 25)

A thermosensitive recording material was obtained in a similar manner to Example 22 except that the A-3 liquid was used in place of the A-1 liquid in the preparation of the dispersion of Example 22.

### (Example 26)

A thermosensitive recording material was obtained in a similar manner to Example 24 except that the A-3 liquid was used in place of the A-1 liquid in the preparation of the dispersion of Example 24.

### (Example 27)

A thermosensitive recording material was obtained in a similar manner to Example 1 except that 136.4 parts of the A-1 liquid, 57.1 parts of the A-5 liquid, 90.9 parts of the B-1 liquid, 90.9 parts of the C liquid, 142.9 parts of the D-1 liquid, and 90.0 parts of water were used in the preparation of the dispersion of Example 1.

### (Example 28)

A thermosensitive recording material was obtained in a similar manner to Example 27 except that the B-2 liquid was used in place of the B-1 liquid in the preparation of the dispersion of Example 27.

### (Example 29)

A thermosensitive recording material was obtained in a similar manner to Example 1 except that 136.4 parts of the A-1 liquid, 136.4 parts of the B-2 liquid, 90.9 parts of the C liquid, 285.7 parts of the D-1 liquid, and 80.0 parts of water were used in the preparation of the dispersion of Example 1.

### (Comparative Example 1)

Blue4est available from Koehler Paper was used as a thermosensitive recording material.

### (Comparative Example 2)

A thermosensitive recording material was obtained in a similar manner to Example 1 except that 200.0 parts of the A-5 liquid, 90.9 parts of the C liquid, 142.9 parts of the D-1 liquid, and 220.0 parts of water were used in the preparation of the dispersion of Example 1.

### (Comparative Example 3)

A thermosensitive recording material was obtained in a similar manner to Example 1 except that 171.4 parts of the A-5 liquid, 127.3 parts of the C liquid, 171.4 parts of the D-1 liquid, and 160.0 parts of water were used in the preparation of the dispersion of Example 1.

### (Comparative Example 4)

A thermosensitive recording material was obtained in a similar manner to Example 1 except that 142.9 parts of the A-5 liquid, 113.6 parts of the C liquid, 357.1 parts of the D-1 liquid, and 80.0 parts of water were used in the preparation of the dispersion of Example 1.

### (Comparative Example 5)

A thermosensitive recording material was obtained in a similar manner to Example 1 except that 114.3 parts of the A-5 liquid, 218.2 parts of the C liquid, 171.4 parts of the D-1 liquid, and 70.0 parts of water were used in the preparation of the dispersion of Example 1.

### (Comparative Example 6)

A thermosensitive recording material was obtained in a similar manner to Example 1 except that 114.3 parts of the A-5 liquid, 136.4 parts of the B-2 liquid, 90.9 parts of the C liquid, 142.9 parts of the D-1 liquid, and 90.0 parts of water were used in the preparation of the dispersion of Example 1.

### (Comparative Example 7)

A thermosensitive recording material was obtained in a similar manner to Example 1 except that 318.2 parts of the B-1 liquid, 90.9 parts of the C liquid, and 142.9 parts of the D-1 liquid were used in the preparation of the dispersion of Example 1.

### (Comparative Example 8)

A thermosensitive recording material was obtained in a similar manner to Example 1 except that 227.3 parts of the A-1 liquid, 159.1 parts of the C liquid, 214.3 parts of the D-1 liquid, and 40.0 parts of water were used in the preparation of the dispersion of Example 1.

### (Comparative Example 9)

A thermosensitive recording material was obtained in a similar manner to Example 1 except that 409.1 parts of the A-1 liquid and 142.9 parts of the D-1 liquid were used in the preparation of the dispersion of Example 1.

### (Comparative Example 10)

A thermosensitive recording material was obtained in a similar manner to Example 1 except that 318.2 parts of the A-1 liquid and 428.6 parts of the D-1 liquid were used in the preparation of the dispersion of Example 1.

### (Comparative Example 11)

A thermosensitive recording material was obtained in a similar manner to Example 1 except that 136.4 parts of the A-1 liquid, 227.3 parts of the B-2 liquid, 285.7 parts of the D-1 liquid, and 80.0 parts of water were used in the preparation of the dispersion of Example 1.

### (Comparative Example 12)

A thermosensitive recording material was obtained in a similar manner to Example 1 except that 227.3 parts of the A-1 liquid, 136.4 parts of the B-2 liquid, 285.7 parts of the D-1 liquid, and 80.0 parts of water were used in the preparation of the dispersion of Example 1.

### (Comparative Example 13)

A thermosensitive recording material was obtained in a similar manner to Example 1 except that 386.4 parts of the A-1 liquid, 45.5 parts of the C liquid, 71.4 parts of the D-1 liquid, and 50.0 parts of water were used in the preparation of the dispersion of Example 1.

### (Comparative Example 14)

A thermosensitive recording material was obtained in a similar manner to Example 1 except that 22.7 parts of the A-1 liquid, 227.3 parts of the C liquid, and 642.9 parts of the D-1 liquid were used in the preparation of the dispersion of Example 1.

### (Comparative Example 15)

A thermosensitive recording material was obtained in a similar manner to Example 1 except that 22.7 parts of the A-1 liquid, 136.4 parts of the C liquid, and 928.6 parts of the D-1 liquid were used in the preparation of the dispersion of Example 1.

The results of Examples and Comparative Examples are shown in Table 1.

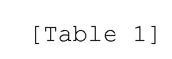

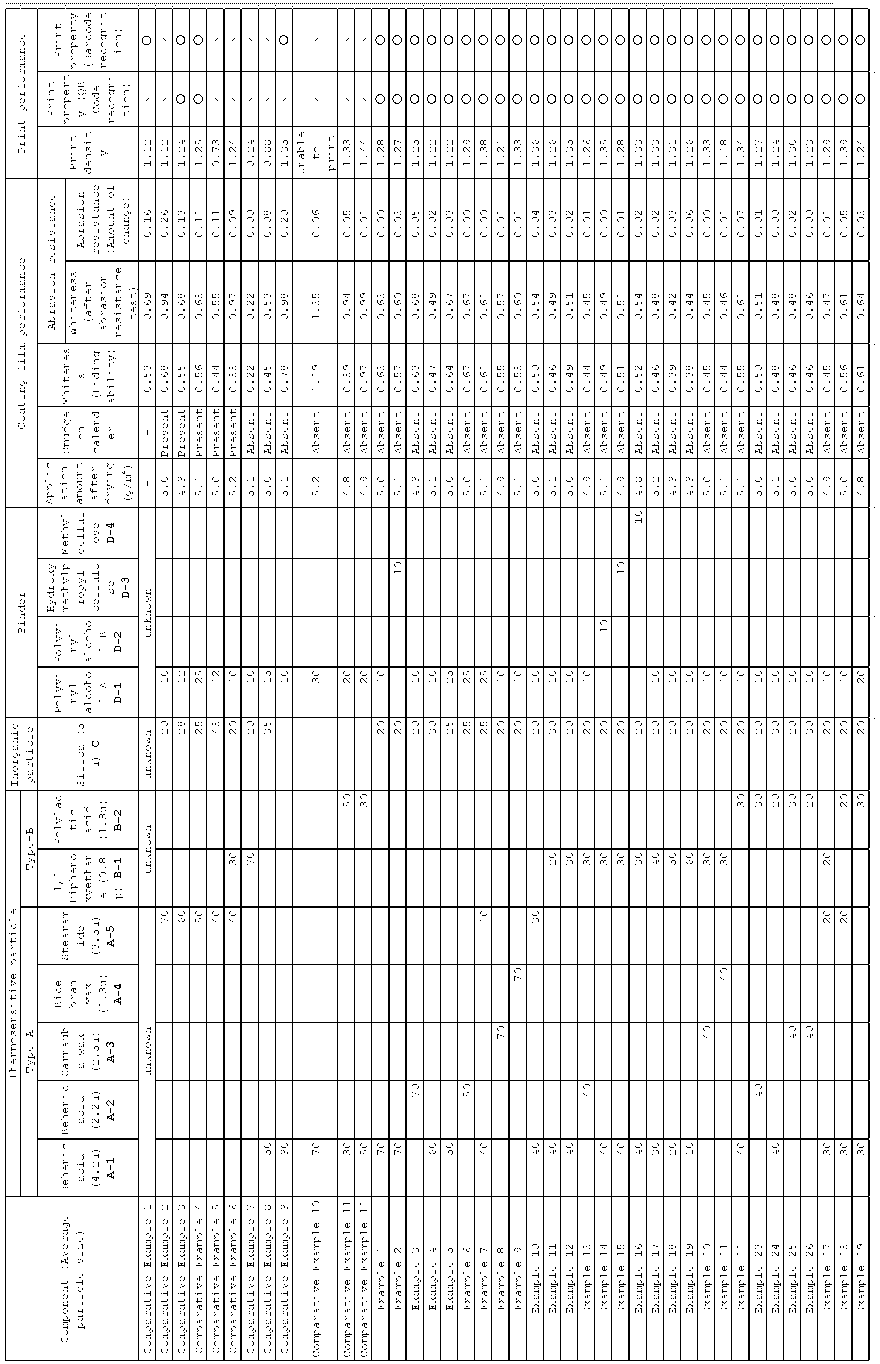

Comparison of Examples 1 to 29 with Comparative Examples 1 to 7 in Table 1 shows that the employment of at least one wax particle selected from the group of behenic acid, carnauba wax, and rice bran wax as thermosensitive particle enables to provide suitable coating film performance (no generation of smudge on calender and abrasion resistance of the thermosensitive layer).

Comparison of Comparative Example 13 with Examples 1, 8, and 9 shows that the content of at least one wax particle selected from the group of behenic acid, carnauba wax, and rice bran wax is preferably 80 mass% or less based on the total blending components of the dispersion. Comparison of Comparative Examples 14 and 15 with Example 19 shows that these wax particles preferably account for 10 mass% or more of the total blending components of the dispersion.

It can be seen from Examples 7 and 10 that suitable coating film performance can be preserved even when a traditionally used fatty acid amide is concomitantly used in combination with the aforesaid wax.

It can be seen from the result of Comparative Example 8 that when the inorganic particle is blended in an amount of more than 30 mass% with respect to the total blending components of the dispersion, print performance is deteriorated, and it can be seen from the results of Comparative Examples 9 to 12 that the whiteness (hiding ability) is similarly deteriorated also in a case where no inorganic particle is blended, and thereby any contrast from printing cannot be obtained, and print performance is deteriorated.

A preferable blending amount of the inorganic particle is considered to be in a range from 10 mass% to 30 mass% based on the total blending components of the dispersion. From the results of Examples, the blending amount of the inorganic particle is preferably in a range from 20 mass% to 30 wt.% in order to preserve an adequate whiteness of the thermosensitive layer.

It can be seen from the results of Examples 22 to 26 and 29 that polylactic acid having biodegradability can be employed as the type-B thermosensitive particle to improve the whiteness of the thermosensitive layer.

Note that various properties were measured or evaluated by the following method.

### (1) Smudge on Calender

Using a calendering machine SC-28 available from YURI ROLL MACHINE Co., Ltd., each thermosensitive recording material was subjected to calendering at a nip pressure of 5 kg/cm to smooth the surface of the thermosensitive layer. The presence or absence of transfer of the material of the thermosensitive layer to the calender roll at that time was visually verified.

### (2) Whiteness (Hiding ability)

Using a calendering machine SC-28 available from YURI ROLL MACHINE Co., Ltd., each thermosensitive recording material was subjected to calendering at a nip pressure of 5 kg/cm to smooth the surface of the thermosensitive layer. The reflection density of the resultant thermosensitive layer was measured with a spectrodensitometer (X-Rite504, available from X-Rite). Note that the reflection density of the single color origami (black) available from Toyo Corporation as a colored foundation layer was found to be 1.40. It is shown that the lower the numerical value of the reflection density, the higher the hiding ability by the thermosensitive recording layer, and the higher the numerical value, the lower the hiding ability. A difference in contrast between black and white is important for barcode print or QR Code (registered trademark) print to be recognized by a reading device, and higher whiteness is required.

### (3) Abrasion Resistance

Using a calendering machine SC-28 available from YURI ROLL MACHINE Co., Ltd., the thermosensitive layer obtained from each of the dispersions of Examples and Comparative Examples was subjected to a calendering at a nip pressure of 5 kg/cm and thereby smoothening the surface of each thermosensitive layer. The surface of the resultant thermosensitive layer was rubbed with the ball of a finger five times, and the reflection density was measured to verify the change in whiteness. The amount of change in whiteness after the abrasion resistance test is preferably less than 0.10, this is because when whiteness is reduced by physical contact such as rubbing, the contrast is reduced, and thus the visibility of recorded characters are lowered and QR Codes (registered trademark) and barcodes become difficult to be recognized. There is a practical problem when the amount of change in whiteness after the abrasion resistance test is 0.10 or more, because the visibility of characters and a recognition rate of code printing are reduced.

### (4) Print Density

Using a receipt printer (trade name: TM-T88V, available from Seiko Epson Corporation), characters were recorded on each thermosensitive recording material at a print density of 100%, a multi-tone print density of 100%, a print speed level of 10, and a power supply unit capacity level of 3 (high), and the reflection density of the resultant recording part was measured with a spectrodensitometer (X-Rite504, available from X-Rite) to determine the print density. The higher the better the print density, and the print density is preferably 1.1 or more in order to be clearly visible to human eyes. There is a practical problem when the print density is less than 0.9, because the sensitivity is decreased and many defects such as voids occur.

### (5) Print Property (QR Code (registered trademark) and Bar Code Recognition)

Using a receipt printer (trade name: TM-T88V, available from Seiko Epson Corporation), a QR Code (registered trademark) and a barcode(registered trademark) were recorded on each thermosensitive recording material at a print density of 100%, a multi-tone print density of 100%, a print speed level of 10, and a power supply unit capacity level of 3 (high), and the QR Code (registered trademark) and the barcode were verified if they were able to be recognized by a standard QR Code (registered trademark) recognition application of iPhone (registered trademark) 13mini (iOS version 16.4.1) and JAN Reader (barcode reader application created by Itoh Tomoaki).

Note that a QR Code (registered trademark) having a size of 1.4 cm × 1.4 cm and a barcode having a size of 3.8 cm in width × 2.6 cm in height illustrated in FIG. 1 were used for the evaluation.

In the table, "∘" means that "was capable of being recognized", and "×" means that "was incapable of being recognized".

The present invention is not limited to the description of the aforesaid embodiments of the invention. Various modifications that can be easily conceived by those skilled in the art without departing from the scope of the claims are also included in the present invention.

## Claims

1. A dispersion for forming a thermosensitive layer, wherein a property of the thermosensitive layer changes from lightproof to light-permeable by intentional heating,
a thermosensitive particle whose property is changed by the intentional heating, an inorganic particle, and a binder are comprised,
at least one wax particle selected from a group of behenic acid, carnauba wax, and rice bran wax is contained as the thermosensitive particle, and
the at least one wax particle accounts for 10 to 80 mass% of total blending components of the dispersion.

2. The dispersion according to claim 1, wherein a fatty acid amide-based wax particle is further comprised as the thermosensitive particle.

3. The dispersion according to claim 1, wherein a 1,2-diphenoxyethane particle and/or a polylactic acid particle is further comprised as the thermosensitive particle.

4. The dispersion according to claim 1, wherein a hollow polymer particle is further comprised as the thermosensitive particle.

5. The dispersion according to claim 1, wherein a blending amount of the inorganic particle is 30 mass% or less based on total blending components of the dispersion.

6. A method for manufacturing a thermosensitive recording material, the method comprising steps of:
applying the dispersion according to claim 1 onto a colored foundation layer; and
removing a solvent from the dispersion and thereby forming a thermosensitive layer on the colored foundation layer.

7. A thermosensitive layer whose property changes from lightproof to light-permeable by intentional heating, wherein
a thermosensitive particle whose property is changed by the intentional heating, an inorganic particle, and a binder are comprised,
at least one wax particle selected from a group of behenic acid, carnauba wax, and rice bran wax is comprised as the thermosensitive particle, and
the at least one wax particle accounts for 10 to 80 mass% of total blending components of the thermosensitive layer.

8. The thermosensitive layer according to claim 7, wherein a fatty acid amide-based wax particle is further comprised as the thermosensitive particle.

9. The thermosensitive layer according to claim 7, wherein a 1,2-diphenoxyethane particle and/or a polylactic acid particle is further comprised as the thermosensitive particle.

10. The thermosensitive layer according to claim 7, wherein a hollow polymer particle is further comprised as the thermosensitive particle.

11. The thermosensitive layer according to claim 1, wherein a blending amount of the inorganic particle is 30 mass% or less based on total blending components of the thermosensitive layer.

12. A thermosensitive recording material comprising: the thermosensitive layer according to claim 7; and a colored foundation layer.

13. The thermosensitive recording material according to claim 12, wherein the colored foundation layer comprises paper.
